# EUROPÄISCHE PATENTSCHRIFT

(11) **EP 3 121 478 B1**
(45) Veröffentlichungstag und Bekanntmachung des Hinweises auf die Patenterteilung: **29.08.2018**
(21) Anmeldenummer: 16157765.5
(22) Anmeldetag: 29.02.2016
(51) Int. Cl.: F16F 1/46, F16F 3/087

(54) **FEDER- UND SPANNELEMENT**
SPRING AND TENSIONING ELEMENT
ÉLEMENT DE SERRAGE ET DE RESSORT

(30) Priorität: 13.07.2015 DE 102015213018
(43) Veröffentlichungstag der Anmeldung: 25.01.2017
(73) Patentinhaber: ContiTech Antriebssysteme GmbH, 30165 Hannover (DE)
(72) Erfinder: Lüker, Svenja, 30419 Hannover (DE); Freiheit, Philipp, 30627 Hannover (DE); Fiss, Tim, 30519 Hannover (DE)
(74) Vertreter: Kilsch, Armin Ralph

(56) Entgegenhaltungen:
- WO-A1-96/27055
- DE-B- 1 053 251
- FR-A1- 2 321 638

## Beschreibung

Die Neuerung betrifft ein Feder- und Spannelement mit mehreren federnd dehnbaren Bändern, vorzugsweise Bänder oder Riemen aus einem dehnbaren Elastomer-Material. Spanneinrichtungen, die mit Hilfe von federnden Elementen zum Spannen von Gegenständen verwendet werden, sind in zahllosen Varianten bekannt. Solche Spanneneinrichtungen arbeiten beispielsweise mit Stahlfedern/Schraubenfedern, die als Druckfedern oder als Zugfeder ausgebildet sind und auf den zu spannenden Gegenstand wirken, oder mit Gummielementen, die durch elastische Längung eine Spannfunktion ausüben. Spanneinrichtungen für hohe Vorspannkräfte im Bereich mehrerer Kilonewton, die einerseits eine hohe Sicherheit gegen Bruch oder Reißen bieten, andererseits jedoch durch federnde Eigenschaften einen nicht unerheblichen positiven wie negativen Ausdehungsweg des gespannten Elementes zulassen, ohne dabei ein erlaubtes Toleranzband der Spannkraft zu verlassen, sind bisher nur in Form von Stahlfederpaketen bekannt.

Solche Spanneinrichtungen, die mit Hilfe von Stahlfederpaketen eine Federspannung aufbringen, sind jedoch in ihrer Konstruktion recht aufwendig und benötigen eine Anzahl von zusätzlichen Elementen für ihre Handhabung, was wiederum zu einem recht hohen Gewicht der Spanneinrichtung führt.

Ein Federelement mit federnd dehnbaren Bändern ist aus der FR 2 321 638 bekannt. Für die Neuerung bestand also die Aufgabe, ein kompaktes und leicht bauendes Feder- und Spannelement bereitzustellen, welches für jegliche Spann- oder Federungsaufgaben modulartig einsetzbar ist und welches zudem einen nur geringen Bauraum benötigt und einfach zu montieren ist.

Gelöst wird diese Aufgabe durch die Merkmale des unabhängigen Anspruchs 1, während weitere vorteilhafte Ausbildungen in den Unteransprüchen offenbart sind.

Dabei sind die federnd dehnbaren Bänder in Bezug auf ihre Federeigenschaft mindestens teilweise in Reihe geschaltet und als endlose längliche Bandschlinge ausgebildet. Die Bandschlingen wiederum sind jeweils einerseits um einen innerhalb der Bandschlingen angeordneten starren länglichen Stützkörper geführt und andererseits um eine von mindestens zwei an beiden gegenüberliegenden beabstandeten Enden des Stützkörpers abgestützt anliegenden und gegenüber dem Stützkörper beweglichen Anlenkungen bzw. Anlenkkörpern oder Endstücken geführt, wobei jede der Bandschlingen den Stützkörper auf dessen der jeweils umschlungenen Anlenkung gegenüberliegender Seite umschlingt und zwischen den Umschlingungen im Wesentlichen parallel zueinander verlaufende Trumabschnitte aufweist, wobei die Bandschlingen so um den Stützkörper und die Anlenkungen geführt sind, dass bei einer Vergrößerung des Abstandes der Anlenkungen zueinander durch äußere Einwirkungen eine elastisch Dehnung der Bandschlingen erfolgt und so eine Zug-Federkraft zwischen den Anlenkungen und damit auch zwischen Anlenkungen und Stützkörper aufgebaut wird.

Durch ein solches Feder- und Spannelement wird ein einbaufertiges Spannmodul als Spannelement zur Verfügung gestellt, dass deutliche Vorteile hinsichtlich Bauraum, Gewicht und Kosten bietet. Die Einstellung der Federrate kann gleichzeitig sich überlagernd durch die Parameter Zugstrangart, Riemenwirklänge und Anzahl der in Reihe geschalteten Riemen in einem sehr weiten Bereich je nach Kundenwunsch justiert werden

Eine vorteilhafte Weiterbildung besteht darin, dass die Anlenkungen als in endseitigen Ausnehmungen des Stützkörpers abgestützt anliegende Buchsen oder Hülsen zur Aufnahme von vorzugsweise Bolzen, Wellen oder Achsen ausgebildet sind. Eine solche Ausbildung stellt eine sehr einfache Anbindung des Feder- und Spannelements an z.B. einen Rahmen und ein zu spannendes Element bereit, nämlich beispielsweise durch ein einfaches Einlegen von Bolzen in die Buchsen und Aufnahme Letzterer mit Augenschrauben.

Eine weitere vorteilhafte Ausbildung besteht darin, dass eine Bandschlinge als in Bezug auf seine Federeigenschaft parallel geschaltetes Bandschlingenpaar halber Breite ausgebildet ist. Hierdurch entstehen konstruktive Freiheiten dadurch, dass eine beliebige symmetrische Aufteilung der erforderlichen Federkraft einer Bandschlinge auf ein Schlingenpaar eine Anpassung der Breite des Feder- und Spannelementes auf den vorgegebenen Bauraum erlaubt. Dies gilt insbesondere für eine besonders einfache vorteilhafte Ausbildung, die darin besteht, dass mindestens drei Bandschlingen vorhanden sind, von denen zwei Bandschlingen in Bezug auf ihre Federeigenschaft parallel geschaltet und zur dritten Bandschlinge symmetrisch angeordnet und in Reihe geschaltet sind.

Eine weitere vorteilhafte Ausbildung besteht darin, dass die Bandschlingen als Flachriemen aus Gummi ausgebildet sind, ggf. als Flachriemen mit Verstärkungselementen in Form eines Zugstrangs. Insbesondere durch die Ausbildung der Verstärkungselemente als Zugstrang oder durch die Ausbildung der einzelnen Verstärkungselemente kann dann die Federungseigenschaft der Bandschlingen auf besonders einfacher Weise beeinflusst werden.

Eine weitere vorteilhafte Ausbildung besteht darin, dass die Bandschlingen den Stützkörper und die Anlenkungen unter Vorspannung umschlingen. Damit erhält man ein leicht vorgespanntes Feder- und Spannelement, welches besonders in der Verwendung als kompaktes Spannmodul leicht und sicher montiert werden kann.

Eine weitere vorteilhafte Ausbildung besteht darin, dass die Bandschlingen auf ihrer sichtbaren Außenseite Markierungen für bestimmte Spannungs- bzw. korrelierende Dehnungszustände aufweisen. Eine solche Ausbildung dient bei der Montage zur genauen Einstellung der Federspannung bzw. zur Kontrolle, ob bei gegebenem Abstand der Anlenkpunkte die zulässige Auslenkung des Feder-und Spannelementes erreicht oder nicht überschritten wird.

Eine weitere vorteilhafte Ausbildung besteht darin, dass die Bandschlingen aus unterschiedlichen Materialien und/oder mit unterschiedlichen Dehnungs- und Federungseigenschaften ausgebildet sind. Auch hiermit lässt sich in weitem Rahmen die Federkraft bzw. Auslenkung des Feder-und Spannelementes auf die unterschiedlichen Anwendungsfelder einstellen.

Die Neuerung nutzt somit die elastische Spannwirkung eines herkömmlichen Riemens aus, der hier vorteilhafterweise als Flachriemen ausgebildet ist. Durch das Spannen des Riemens zwischen Anlenkungen bzw. Endstücken wird durch den Riemen eine erhebliche federnde Spannkraft aufgebaut. Um den Federweg des Spannmoduls deutlich zu erhöhen, also eine nur gering veränderliche Spannkraft innerhalb eines Toleranzbandes über einen großen Federweg bereitzustellen wird innerhalb des Spannmoduls eine Reihenschaltung von mehreren Riemen realisiert. Da die als Spannelement eingesetzten Riemen nicht um Scheiben umlaufen, kann die Reihenschaltung platzsparend ineinander verschachtelt realisiert werden, in dem sich z.B. der erste Riemen wie auch der zweite Riemen an dem zentralen Stützkörper abstützen. Dadurch wird ein einbaufertiges Spannelement zur Verfügung gestellt, dass deutliche Vorteile hinsichtlich Bauraum, Gewicht und Kosten bietet. Die Einstellung der Federrate kann gleichzeitig sich überlagernd durch die Parameter Zugstrangart, Riemenwirklänge und Anzahl der in Reihe geschalteten Riemen in einem sehr weiten Bereich je nach Kundenwunsch justiert werden.

Anhand eines Ausführungsbeispiels soll die Erfindung näher erläutert werden. Es zeigen
- Fig. 1: ein neuerungsgemäßes Feder- und Spannelement,
- Fig. 2: den Stützkörpern eines neuerungsgemäßen Feder- und Spannelementes als Einzelteil,
- Fig. 3a: den Stützkörpern eines neuerungsgemäßen Feder- und Spannelementes mit Anlenkungen
- Fig. 3b: ein neuerungsgemäßes Feder- und Spannelement als Zusammenbau

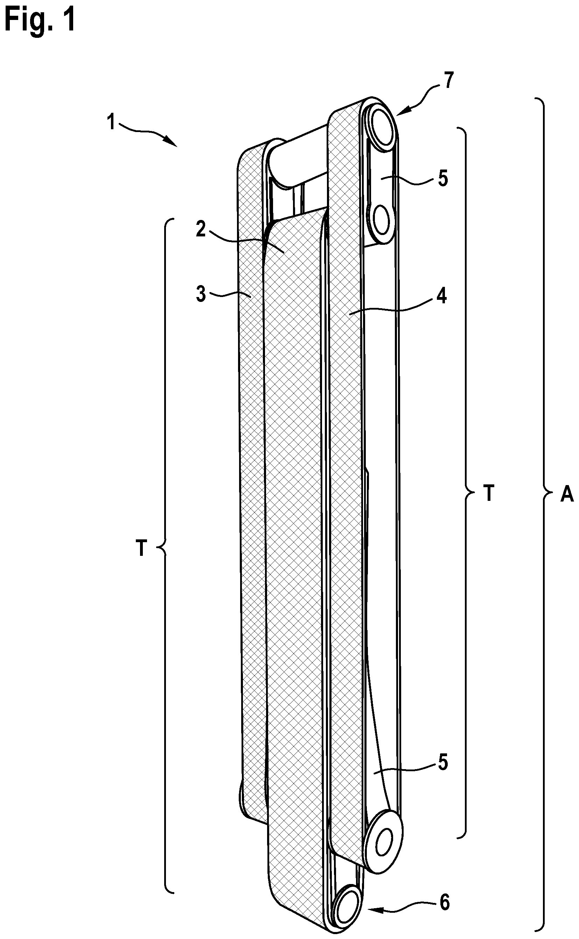

Die Fig. 1 zeigt ein Feder- und Spannelement 1 mit mehreren federnd dehnbaren Bändern, hier ausgebildet aus einem dehnbaren Elastomer-Material, welche in Bezug auf ihre Federeigenschaft in Reihe geschaltet sind. Die Bänder sind dabei als endlose längliche Bandschlingen 2, 3 und 4 ausgebildet und jeweils einerseits um einen innerhalb der Bandschlingen 2, 3 und 4 angeordneten starren länglichen Stützkörper 5 geführt, während sie andererseits um eine von mindestens zwei an beiden gegenüberliegenden beabstandeten Enden des Stützkörpers 5 abgestützt anliegenden und gegenüber dem Stützkörper beweglichen Anlenkungen 6 und 7 geführt sind.

Jede der Bandschlingen 2, 3 und 4 umschlingt also den Stützkörper 5 auf dessen der jeweils umschlungenen Anlenkung 6, 7 gegenüberliegenden Seite. Zwischen den Umschlingungen weisen die Bandschlingen im Wesentlichen parallel zueinander verlaufende Trumabschnitte T auf.

Die Bandschlingen 2, 3 und 4 sind so um den Stützkörper und die Anlenkungen geführt, dass bei einer Vergrößerung des Abstandes A der Anlenkungen 6 und 7 zueinander durch äußere Einwirkungen/Zugkräfte eine elastische Dehnung der Bandschlingen erfolgt und so eine Zug-Federkraft zwischen den Anlenkungen 6 und 7 aufgebaut wird.

Die Anlenkungen 6 und 7 sind hier als in endseitigen Ausnehmungen des Stützkörpers abgestützt anliegende Buchsen zur Aufnahme eines Bolzen ausgebildet.

Man erkennt hier gut, dass die Bandschlingen 3 und 4 als in Bezug auf seine Federeigenschaft parallel geschaltetes Bandschlingenpaar ausgebildet sind, welche die halbe Breite der Bandschlinge 2 aufweisen, dass also drei Bandschlingen vorhanden sind, von denen die zwei Bandschlingen 3 und 4 in Bezug auf ihre Federeigenschaft parallel geschaltet und zur dritten Bandschlinge 2 symmetrisch angeordnet und in Reihe geschaltet sind.

Die Bandschlingen 2, 3 und 4 sind als Flachriemen aus Gummi ausgebildet, die einen hier nicht näher dargestellten Zugstrang als Festigkeitsträger aufweisen.

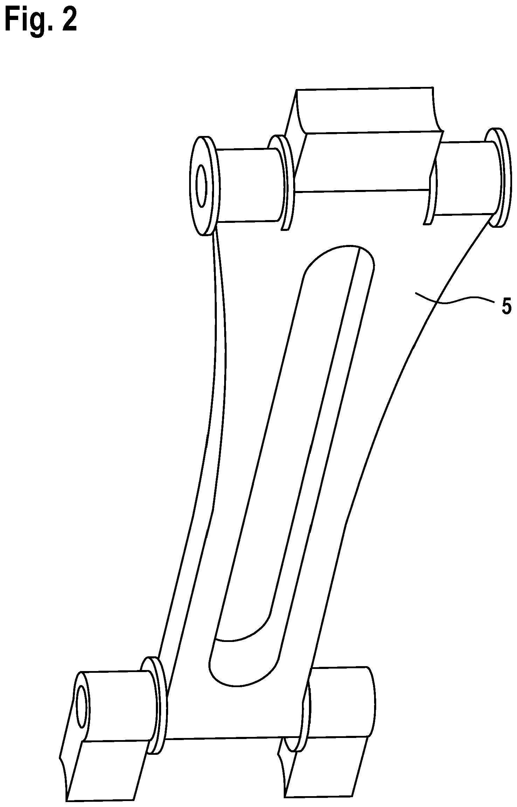

Fig. 2 zeigt zum besseren Verständnis noch einmal den Stützkörpern 5 als Einzelteil.

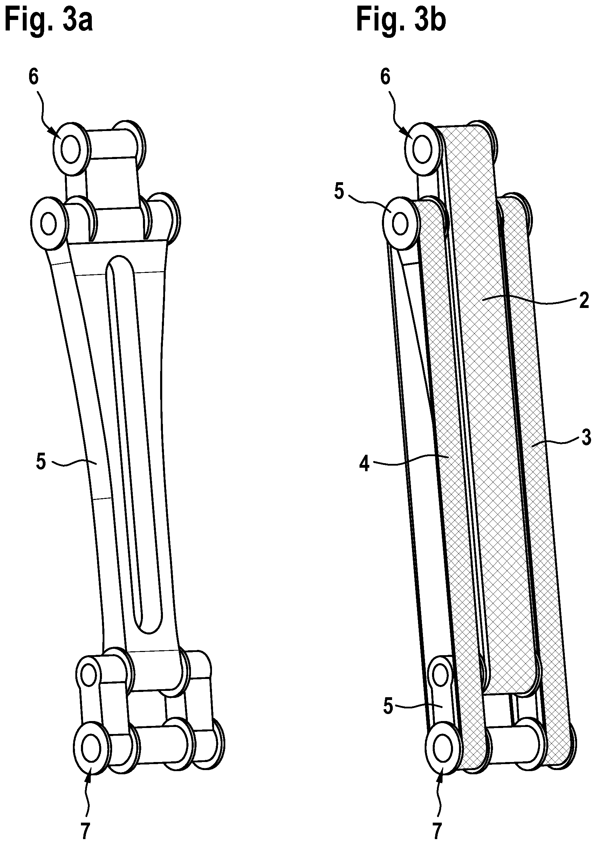

Fig. 3a und Fig. 3b zeigen einerseits noch einmal den Stützkörper 5 mit den abgestützt anliegenden und gegenüber dem Stützkörper beweglichen Anlenkungen 6 und 7 ohne die umgelegten Bandschlingen, und andererseits zum Vergleich das komplette Feder- und Spannelement mit allen Teilen.

### Bezugszeichenliste

### (Teil der Beschreibung)

- 1: Feder- und Spannelement
- 2: Bandschlinge
- 3: Bandschlinge
- 4: Bandschlinge
- 5: Stützkörper
- 6: Anlenkung, ausgebildet als Buchse
- 7: Anlenkung, ausgebildet als Buchse

- T: Parelleler Trumabschnitt
- A: Abstand der Anlenkungen

## Patentansprüche

1. Feder- und Spannelement (1) mit mehreren federnd dehnbaren Bändern, vorzugsweise Bänder oder Riemen aus einem dehnbaren Elastomer-Material, welche in Bezug auf ihre Federeigenschaft mindestens teilweise in Reihe geschaltet sind, wobei die Bänder als endlose längliche Bandschlingen (2, 3, 4) ausgebildet sind und jeweils einerseits um einen innerhalb der Bandschlingen angeordneten starren länglichen Stützkörper (5) geführt sind und andererseits um eine von mindestens zwei an beiden gegenüberliegenden beabstandeten Enden des Stützkörpers (5) abgestützt anliegenden und gegenüber dem Stützkörper beweglichen Anlenkungen (6, 7) geführt sind, wobei jede der Bandschlingen (2, 3, 4) den Stützkörper (5) auf dessen der jeweils umschlungenen Anlenkung (6, 7) gegenüberliegender Seite umschlingt und zwischen den Umschlingungen im Wesentlichen parallel zueinander verlaufende Trumabschnitte (T) aufweist, wobei die Bandschlingen so um den Stützkörper und die Anlenkungen geführt sind, dass bei einer Vergrößerung des Abstandes (A) der Anlenkungen zueinander durch äußere Einwirkungen eine elastische Dehnung der Bandschlingen erfolgt und so eine Zug-Federkraft zwischen den Anlenkungen (6, 7) aufgebaut wird.

2. Feder- und Spannelement nach Anspruch 1, bei dem die Anlenkungen (6, 7) als in endseitigen Ausnehmungen des Stützkörpers abgestützt anliegende Buchsen oder Hülsen zur Aufnahme von vorzugsweise Bolzen, Wellen oder Achsen ausgebildet sind.

3. Feder- und Spannelement nach Anspruch 1 oder 2, bei dem eine Bandschlinge als in Bezug auf seine Federeigenschaft parallel geschaltetes Bandschlingenpaar (3, 4) halber Breite ausgebildet ist.

4. Feder- und Spannelement nach einem der Ansprüche 1 bis 3, bei dem mindestens drei Bandschlingen vorhanden sind, von denen zwei Bandschlingen (3, 4) in Bezug auf ihre Federeigenschaft parallel geschaltet und zur dritten Bandschlinge (2) symmetrisch angeordnet und in Reihe geschaltet sind.

5. Feder- und Spannelement nach einem der Ansprüche 1 bis 4, bei dem die Bandschlingen (2, 3, 4) als Flachriemen aus Gummi ausgebildet sind, ggf. als Flachriemen mit Verstärkungselementen in Form eines Zugstrangs.

6. Feder- und Spannelement nach einem der Ansprüche 1 bis 5, bei dem die Bandschlingen (2, 3, 4) den Stützkörper und die Anlenkungen unter Vorspannung umschlingen.

7. Feder- und Spannelement nach einem der Ansprüche 1 bis 6, bei dem die Bandschlingen (2, 3, 4) auf ihrer sichtbaren Außenseite eine Markierung für bestimmte Spannungs- bzw. korrelierende Dehnungszustände aufweisen.

8. Feder- und Spannelement nach einem der Ansprüche 1 bis 7, bei dem die Bandschlingen (2, 3, 4) aus unterschiedlichen Materialien und/oder mit unterschiedlichen Dehnungs- und Federungseigenschaften ausgebildet sind.

## Claims

1. Spring and tensioning element (1) having a plurality of bands which can be stretched resiliently, preferably bands or belts made from an elastomer material which can be stretched, which bands are connected at least partially in series in relation to their spring property, the bands being configured as endless elongate band loops (2, 3, 4) and firstly being guided around a rigid elongate supporting body (5) which is arranged within the band loops and secondly being guided around one of at least two linkages (6, 7) which bear in a supported manner against the two opposite spaced apart ends of the supporting body (5) and can be moved with respect to the supporting body, each of the band loops (2, 3, 4) wrapping around the supporting body (5) on its side which lies opposite the respective wrapped-around linkage (6, 7) and having run sections (T) which run substantially parallel to one another between the wrapped-around portions, the band loops being guided around the supporting body and the linkages in such a way that, in the case of an increase in the spacing (A) of the linkages from one another as a result of external actions, elastic stretching of the band loops takes place and a tensile spring force is thus built up between the linkages (6, 7).

2. Spring and tensioning element according to Claim 1, in which the linkages (6, 7) are configured as bushes or sleeves which bear in a supported manner in end-side recesses of the supporting body, for receiving preferably pins, shafts or axles.

3. Spring and tensioning element according to Claim 1 or 2, in which a band loop is configured as a band loop pair (3, 4) of half width which is connected in parallel in respect of its spring property.

4. Spring and tensioning element according to one of Claims 1 to 3, in which there are at least three band loops, of which two band loops (3, 4) are connected in parallel with respect to their spring property and are arranged symmetrically and are connected in series with respect to the third band loop (2).

5. Spring and tensioning element according to one of Claims 1 to 4, in which the band loops (2, 3, 4) are configured as flat belts made from rubber, optionally as flat belts with reinforcing elements in the form of a tensile member.

6. Spring and tensioning element according to one of Claims 1 to 5, in which the band loops (2, 3, 4) wrap around the supporting body and the linkages under prestress.

7. Spring and tensioning element according to one of Claims 1 to 6, in which, on their visible outer side, the band loops (2, 3, 4) have a marking for defined tensioning or correlating stretching states.

8. Spring and tensioning element according to one of Claims 1 to 7, in which the band loops (2, 3, 4) are configured from different materials and/or with different stretching and springing properties.

## Revendications

1. Élément de ressort et de serrage (1) comprenant plusieurs bandes extensibles élastiquement, de préférence des bandes ou des courroies en matériau élastomère extensible qui sont montées au moins en partie en rangées en termes de leur propriété élastique, les bandes étant réalisées sous forme de boucles de bandes allongées sans fin (2, 3, 4) et étant guidées à chaque fois d'une part autour d'un corps de support allongé rigide (5) disposé à l'intérieur des boucles de bandes et d'autre part étant guidées autour d'une parmi au moins deux articulations (6, 7) s'appliquant de manière supportée contre deux extrémités opposées espacées du corps de support (5) et déplaçables par rapport au corps de support, chacune des boucles de bandes (2, 3, 4) enveloppant le corps de support (5) sur son côté opposé à l'articulation à chaque fois enveloppée (6, 7) et présentant entre les enveloppements des sections de tronçon (T) s'étendant essentiellement parallèlement l'une à l'autre, les boucles de bandes étant guidées autour du corps de support et des articulations de telle sorte que dans le cas d'une augmentation de la distance (A) entre les articulations par des actions extérieures, une extension élastique des boucles de bandes se produise et une force de ressort de traction s'établisse entre les articulations (6, 7).

2. Élément de ressort et de serrage selon la revendication 1, dans lequel les articulations (6, 7) sont réalisées sous forme de douilles ou de manchons s'appliquant de manière supportée dans des évidements du côté de l'extrémité du corps de support, pour recevoir de préférence des boulons, des arbres ou des axes.

3. Élément de ressort et de serrage selon la revendication 1 ou 2, dans lequel une boucle de bande est réalisée sous forme d'une paire de boucles de bandes (3, 4) de demi-largeur montée parallèlement par rapport à sa propriété élastique.

4. Élément de ressort et de serrage selon l'une quelconque des revendications 1 à 3, dans lequel au moins trois boucles de bandes sont prévues, dont deux boucles de bandes (3, 4) sont montées parallèlement par rapport à leur propriété de ressort et sont disposées symétriquement par rapport à la troisième boucle de bande (2) et sont montées en rangées.

5. Élément de ressort et de serrage selon l'une quelconque des revendications 1 à 4, dans lequel les boucles de bandes (2, 3, 4) sont réalisées sous forme de courroies plates en caoutchouc, éventuellement sous forme de courroies plates avec des éléments de renforcement sous la forme d'une tige de traction.

6. Élément de ressort et de serrage selon l'une quelconque des revendications 1 à 5, dans lequel les boucles de bandes (2, 3, 4) enveloppent le corps de support et les articulations avec précontrainte.

7. Élément de ressort et de serrage selon l'une quelconque des revendications 1 à 6, dans lequel les boucles de bandes (2, 3, 4) présentent, au niveau de leur côté extérieur visible, un marquage pour indiquer des états de tension déterminés ou des états d'extension associés.

8. Élément de ressort et de serrage selon l'une quelconque des revendications 1 à 7, dans lequel les boucles de bandes (2, 3, 4) sont réalisées à partir de matériaux différents et/ou avec des propriétés d'extension et d'élasticité différentes.
